# EUROPEAN PATENT SPECIFICATION

(11) **EP 4 021 083 B1**
(45) Date of publication and mention of the grant of the patent: **04.09.2024**
(21) Application number: 20880572.1
(22) Date of filing: 23.07.2020
(51) Int. Cl.: H04W 48/08, H04W 48/00, H04W 48/16, H04W 60/04, H04W 8/18

(54) **APN MATCHING METHOD, TERMINAL AND STORAGE MEDIUM**
APN-ABGLEICHSVERFAHREN, ENDGERÄT UND SPEICHERMEDIUM
PROCÉDÉ DE MISE EN CORRESPONDANCE D'APN, TERMINAL ET SUPPORT DE STOCKAGE

(30) Priority: 31.10.2019 CN 201911055000
(43) Date of publication of application: 29.06.2022
(73) Proprietor: Honor Device Co., Ltd., Shenzhen, Guangdong 518040 (CN)
(72) Inventor: QIAO, Fuxiang, Shenzhen, Guangdong 518129 (CN); WANG, Lei, Shenzhen, Guangdong 518129 (CN); LIU, Yazhou, Shenzhen, Guangdong 518129 (CN); LI, Lunke, Shenzhen, Guangdong 518129 (CN); WANG, Qiuyi, Shenzhen, Guangdong 518129 (CN)
(74) Representative: Isarpatent
(86) International application number: PCT/CN2020/103842
(87) International publication number: WO 2021/082545

(56) References cited:
- CN-A- 101 404 827
- CN-A- 101 404 827
- CN-A- 101 895 966
- CN-A- 101 895 966
- CN-A- 103 428 760
- CN-A- 105 517 104
- CN-A- 106 506 728
- CN-A- 108 702 628
- US-A1- 2014 153 402
- SONY, DEUTSCHE TELEKOM: "Corrections and improvements of PLMN assigned Capability signaling", 3GPP DRAFT; S2-1907016 RACS CORRECTIONS AND IMPROVEMENTS OF PLMN ASSIGNED CAPABILITY SIGNALING, vol. SA WG2, 18 June 2019 (2019-06-18), Sapporo, Japan, pages 1 - 26, XP051751990

## Description

### TECHNICAL FIELD

This application relates to the field of communication technologies, and in particular, to an APN matching method, a terminal, and a storage medium.

### BACKGROUND

An APN (Access Point Name, access point name) is one of basic configuration parameters of a mobile network data service. Different APNs identify methods for using a data service by a terminal for accessing a network.

In an existing method for establishing a network connection by using an APN, usually an APN is obtained first, and then an APN corresponding to an operator is used to access a network. In an existing APN matching method, usually correspondences between public land mobile networks (Public Land Mobile Network, PLMN for short) of all operators in China or around the world and APNs are usually preset in a terminal. Each operator usually has a plurality of PLMNs, and therefore there may be a situation in which a plurality of PLMNs correspond to a same group of APNs. After a user inserts a universal subscriber identity module (Universal Subscriber Identity Module, USIM for short) into a terminal, the terminal may read an international mobile subscriber identity number (International Mobile Subscriber Identity Number, IMSI for short) from a designated file, read an operator PLMN, namely, a home PLMN, based on first few bits of the IMSI, then find a corresponding APN according to a preset list in the terminal, and select the APN, to ensure that the user uses an accessed network and uses a data service.

However, as the quantity of users increases, if the original PLMN is not enough for accommodation, the operator is likely to add a new PLMN. Because the preset list in the terminal may not be updated accordingly, there may be a situation in which it is difficult to match a corresponding PLMN in a preset APN list, and therefore it may be difficult for the terminal to establish a network connection by using an APN.

CN 101404827 A discloses a mobile terminal, a network server and a method for the mobile terminal to initiate a packet service. The mobile terminal comprises an acquisition module which is used for acquiring an access point name list of a currently accessed network of the mobile terminal, a selection module which is used for selecting an access point name in the access point name list of the currently accessed network, and an accessing module which is used for initiating a packet service request in the currently accessed network according to the selected access point name.

CN 101895966 A discloses a public land mobile network searching method and a public land mobile network searching device.

### SUMMARY

This application provides an APN matching method, a terminal, and a storage medium, as defined in the appended set of claims, so as to resolve the problem in the existing technology that it is difficult to match an APN when an operator adds a new PLMN and the newly added PLMN is not stored in a list for storing a relationship between an operator PLMN and APN information corresponding to the operator PLMN in the terminal.

It can be understood that the APN matching method provided in this application performs APN matching by using a successfully registered PLMN in the second list when the APN matched by the HPLMN is empty (that is, no corresponding APN is matched). The foregoing method greatly increases a success rate of APN matching when an operator adds a new PLMN and the newly added PLMN is not stored in a list for storing a relationship between an operator PLMN and APN information corresponding to the operator PLMN in the terminal or when the terminal is abnormal, and can simultaneously adapt to the 5G, 4G, 3G, 2G, and the like, with high reliability.

### BRIEF DESCRIPTION OF DRAWINGS

To explain the technical solutions of the embodiments of this application more clearly, the following will briefly describe the accompanying drawings that need to be used in the description of the embodiments. Apparently, the accompanying drawings in the following description show only some embodiments of this application, and a person of ordinary skill in the art can still derive other accompanying drawings from these accompanying drawings without creative efforts. The accompanying drawings which are incorporated in and constitute a part of the specification illustrate embodiments consistent with this application and together with the specification serve to explain the principles of this application.
FIG. 1 is an interactive flowchart of an APN matching method according to the existing technology;
FIG. 2 is an interactive flowchart of another APN matching method according to the existing technology;
FIG. 3 is a block flowchart of an APN matching method according to an embodiment of this application;
FIG. 4A-FIG. 4B are a block flowchart of an APN matching method according to an embodiment of this application;
FIG. 5 is a structural block diagram of a terminal according to an embodiment of this application; and
FIG. 6 is a schematic block diagram of a terminal according to an embodiment of this application.

### DESCRIPTION OF EMBODIMENTS

To better understand the technical solutions of this application, the embodiments of this application are described in detail below with reference to the accompanying drawings.

The present invention is disclosed in the independent claims.

The dependent claims define particular embodiments of the invention.

Terms used in the embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly.

It should be understood that the term "and/or" used in the text merely describes an association relationship between associated objects, and indicates that three relationships may exist. For example, A and/or B may indicate the following cases: Only A exists, both A and B exist, and only B exists. The character "/" in the text usually indicates an "or" relationship between the associated objects.

For the situation in which no corresponding PLMN can be found in the preset APN list, the existing technology provides the following solutions: Solution 1: Perform APN matching by using an EHPLMN (Equivalent Home Public Land Mobile Network, equivalent home PLMN).

Specifically, the EHPLMN is a local PLMN has the same status (equivalent) as a PLMN currently selected by a terminal, and the EHPLMN is stored in a universal subscriber identity module (Universal Subscriber Identity Module, USIM for short) card. For example, the HPLMN corresponding to China Mobile is 46000 and the EHPLMN may include 46002, 46007, or the like.

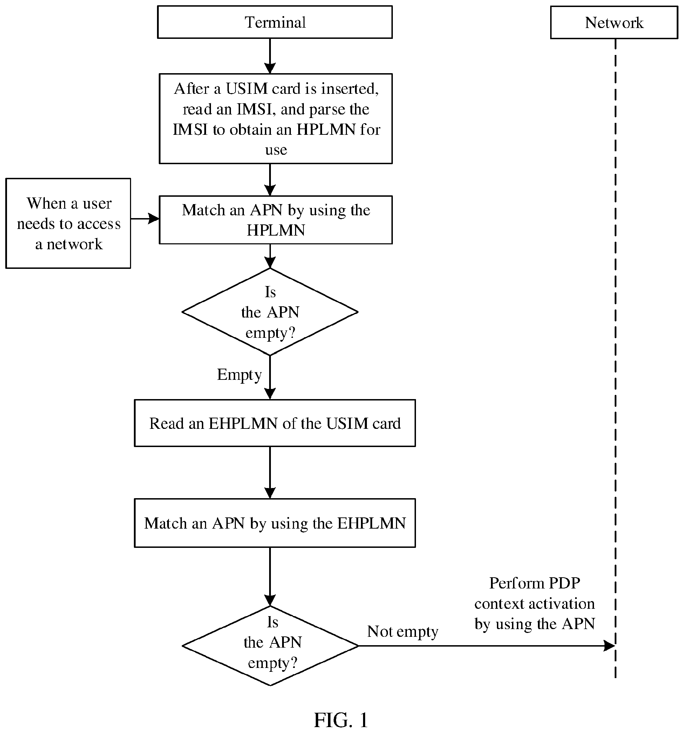

As shown in FIG. 1, after the network attach (Attach), when a user needs to access the network, the user needs to first perform PDP (Packet Data Protocol) context activation. If no corresponding APN can be matched by using an HPLMN, an EHPLMN in a USIM card is read, and APN matching is performed by using the EHPLMN.

For Solution 1, if no corresponding APN is matched by using the HPLMN, the USIM card needs to have an EHPLMN, and the matching by using the EHPLMN needs to be accurate; otherwise, an error may occur in the APN matching. However, there are a plurality of operators in the world, and therefore it is difficult to avoid the situation in which EHPLMNs are not written into cards of a specific quantity of operators or EHPLMNs of a specific quantity of cards are inaccurate.

Solution 2: Use an APN allocated by a network during a network register procedure (Attach) by using the 4G (4^{rd} Generation, 4^{th} Generation mobile communication technology).

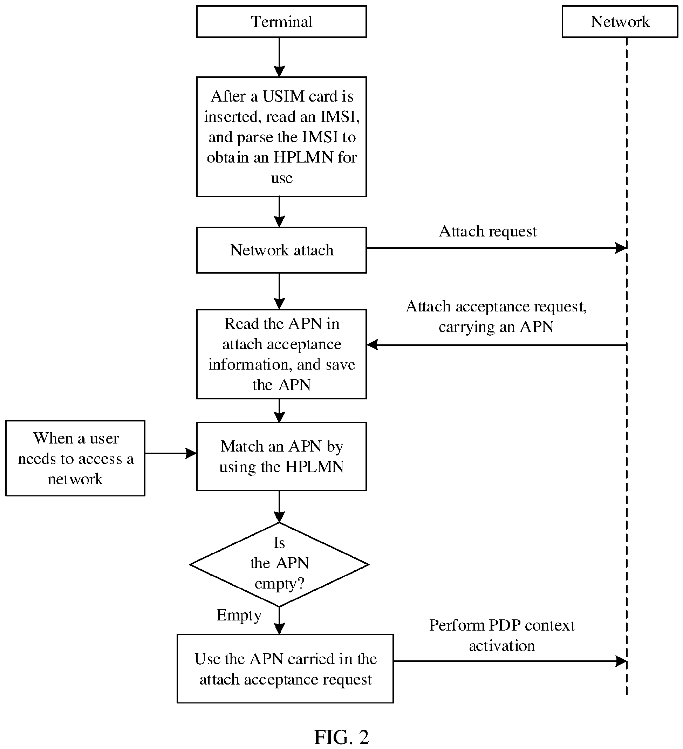

Specifically, as shown in FIG. 2, during a 4G register procedure (Attach), if the terminal does not report an APN, a network may allocate an APN carried in an attach accept request by default. If the terminal fails to match the APN by using the HPLMN, the terminal may perform PDP context activation by using the APN that is carried by default and that is allocated by the 4G network. For Solution 2, in using the APN allocated by the network during attach to the 4G network, there are some disadvantages as follows:
(1) The APN allocated by the network during attach may be an APN of an IMS, and the terminal cannot access the network by using the APN.
(2) The APN allocated by the network during attach may not carry DNS (domain name system, domain name system) information, and the terminal cannot access the network by using the APN.
(3) It is impossible to resolve the problem that the APN is empty in 5G (5^{th} generation mobile networks, 5^{th} generation mobile communication technology), 3G (3^{rd} generation, 3^{rd} generation mobile communication technology), and 2G (2^{nd} generation, 2^{nd} generation mobile communication technology).

In view of the above, an embodiment of this application provides an APN matching method, and a core concept of the method is to perform APN matching by using a successfully registered PLMN when the APN matched by the HPLMN is empty (that is, no corresponding APN is matched). The foregoing method greatly increases a success probability of APN matching when an operator adds a new PLMN and the newly added PLMN is not stored in a list for storing a relationship between an operator PLMN and APN information corresponding to the operator PLMN in the terminal or when the terminal is abnormal, and can simultaneously adapt to the 5G, 4G, 3G, 2G, and the like, with high reliability.

The following further describes, with reference to the accompanying drawings, the APN matching method provided in the embodiment of this application.

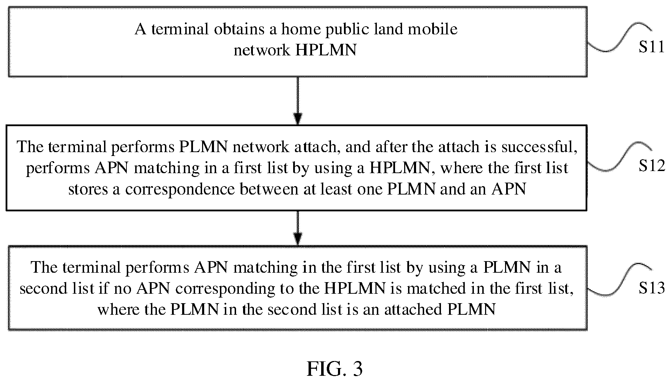

FIG. 3 is a block flowchart of an APN matching method according to an embodiment of this application.

The APN matching method is applied to a terminal and includes:
Step S 11: A terminal obtains a home public land mobile network HPLMN.
Step S12: The terminal performs a PLMN network attach, and after the attach is successful, performs APN matching in a first list by using the HPLMN, where the first list stores a correspondence between at least one PLMN and an APN.
Step S13: The terminal performs APN matching in the first list by using a PLMN in a second list if no APN corresponding to the HPLMN is matched in the first list, where the PLMN in the second list is a registered PLMN. It can be understood that the APN matching method provided in the embodiment of this application performs APN matching by using a historically, successfully registered PLMN in the second list when the APN matched by the HPLMN is empty (that is, no corresponding APN is matched). The foregoing method greatly increases a success rate of APN matching when an operator adds a new PLMN and the newly added PLMN is not stored in a list for storing a relationship between an operator PLMN and APN information corresponding to the operator PLMN in the terminal or when the terminal is abnormal, and can simultaneously adapt to the 5G, 4G, 3G, 2G, and the like, with high reliability.

The following further describes in detail the APN matching method provided in the embodiment of this application.

For step S11: Obtain a home public land mobile network HPLMN:
Specifically, the terminal may be a wireless terminal. The wireless terminal may be a device for providing voice and/or data connectivity only to a user, a handheld device having a wireless connection function, or another processing device connected to a wireless modem. The wireless terminal may communicate with one or more core networks through a RAN (Radio Access Network, radio access network). The wireless terminal may be a mobile terminal, such as a mobile phone (or referred to as a "cellular" phone), and a computer having a mobile terminal, for example, a portable, pocket-sized, handheld, computer-built, or vehicle-mounted mobile apparatus, which exchange voice and/or data with the radio access network, for example, a device such as a PCS (Personal Communication Service, personal communication service) phone, a cordless phone, a session initiation protocol (SIP) phone, a WLL (Wireless Local Loop, wireless local loop) station, or a PDA (Personal Digital Assistant, personal digital assistant). The wireless terminal may also be referred to as a system, a subscriber unit (Subscriber Unit), a subscriber station (Subscriber Station), a mobile station (Mobile Station), a mobile console (Mobile Console), a remote station (Remote Station), an access point (Access Point), a remote terminal (Remote Terminal), an access terminal (Access Terminal), a user terminal (User Terminal), a user agent (User Agent), or user equipment.

The home public land mobile network HPLMN is a home public land mobile network PLMN of a terminal user. That is, a mobile country code MCC and a mobile network code MNC included in an IMSI in a USIM card of the terminal are consistent with an MCC and an MNC on the HPLMN, and there is only one home PLMN for a user.

The process of obtaining a home public land mobile network HPLMN includes:
When a USIM card is inserted into a terminal, an AP (application processor, application processor) of the terminal initiates an HPLMN obtaining request to a modem (Modem), the modem and the USIM card perform communication interaction. The modem reads an IMSI from an IMSI file of the USIM card, parses the IMSI to obtain a home public land mobile network HPLMN, and returns the home public land mobile network HPLMN to the AP (application processor, application processor), where the HPLMN is first five bits of the IMSI.

A list for storing a relationship between an operator PLMN and APN information corresponding to the operator PLMN, that is, the first list, is preset in the terminal. The first list is preset in the terminal before the terminal leaves a factory. The first list includes relationships between a plurality of operator PLMNs and APNs corresponding to the plurality of operator PLMNs. When a new operator PLMN appears, the new operator PLMN may not match a corresponding APN because the first list is preset in the terminal before leaving the factory.

For step S12: The terminal performs a PLMN network attach, and after the attach is successful, performs APN matching in a first list by using the HPLMN, where the first list stores a correspondence between at least one PLMN and an APN.

Specifically, when the terminal is turned on or needs to be reconnected after being disconnected from the network, the terminal needs to perform a PLMN network attach again. The PLMN is a network established and operated by a government or an operator approved by the government for the purpose of providing land mobile communication services to the public. The network needs to be interconnected with a PSTN (Public Switched Phone Network, public switched phone network), to form a whole regional or national scale communication network. The PLMN includes an MCC (Mobile Country Code, mobile country code) and an MNC (Mobile Network Code, mobile network code). For example, the PLMN of China Mobile (China Mobile) is 46000, where the MCC is 460 and the MNC is 00.

The process of a network attach by a terminal is roughly as follows: The terminal selects at least one PLMN, and then through an access network device and a core network device corresponding to the selected PLMN, uses one of the selected at least one PLMN for performing a network attach.

The specific process of a network attach by the terminal includes the following steps:
Step S021: The terminal receives system information sent by an access network device, where the system information includes a PLMN identifier (in one or more embodiments of this application, there are a plurality of the PLMN identifiers).
Step S022: The terminal sends an attach request to the access network device, where the attach request includes information that the terminal requests to attach to at least one PLMN (usually including one or two PLMNs, which is exemplified by including one PLMN in the following) and an IMSI identifier of the terminal.
Step S023: The access network device obtains, based on the attach request, information for requesting to attach to one corresponding PLMN included in the attach request, forwards the attach request to a corresponding core network device. It should be known that an identifier of each PLMN corresponds to one PLMN, each PLMN corresponds to one core network device, the identifier of each PLMN also corresponds to one attach request message, and a core network device can communicate with only the PLMN corresponding to the core network device.
Step S024: After the core network device obtains the PLMN identifier and the IMSI identifier of the terminal, the core network device requests to an HLR (Home Location Register, home location register) for authentication, and authenticates the terminal based on user subscription data issued by the HLR; in addition, the core network device uploads current position information of the terminal to the HLR. After the authentication succeeds, the core network device may send an attach accept message to the access network device, and the access network device returns attach accept information to the terminal, so that the PLMN network attach is successful.

More specifically, a backbone network of an operator is divided into three layers: a core layer, a convergence layer, and an access layer. A network from the access layer to the terminal is an access network. The access network may be a GPRS (General Packet Radio Service, general packet radio service), GSM (Global System for Mobile Communication, global system for mobile communication), or 3G network, or the like. The core layer is to implement an optimized transmission function between backbone networks. A core network is a network that provides terminal connection, terminal management, and service bearing at the core layer, namely, the PLMN. The core network provides an interface between a bearing network and an external network.

The access network device may be an eNB (evolved NodeB, evolved NodeB), an RNC (Radio Network Controller, radio network controller), or a BSC (Base Station Controller, base station controller). The core network device may be an MME (Mobility Management Entity, mobility management entity), an SGSN (Serving GPRS Support Node, serving GPRS support node), or an MSC (Mobile Switching Center, mobile switching center).

More specifically, using a PS (Packet Switch, packet switch) domain of a mobile communication system as an example, in 3G, the access network device is an RNC, and the core network device is an SGSN; in 4G (4^{th} Generation, 4^{th} generation mobile communication technology), the access network device is an eNB, and the core network device is an MME; and in 2G (2^{nd} Generation, 2^{nd} generation mobile communication technology), the access network device is a BSC, and the core network device is an SGSN. Using a CS (Circuit Switch, circuit switch) domain of a mobile communication system as an example, in 3G/2G, the access network device is an RNC (3G)/BSC (2G), and the core network device is an MSC.

After the PLMN attach is successful, the performing APN matching in the first list by using the HPLMN specifically includes: performing identifier matching in the first list by using the HPLMN; and if a field that is the same as an identifier of the HPLMN is matched, obtaining an APN corresponding to the field that is the same as the identifier of the HPLMN, to complete the APN matching.

The first list may be stored in a database of the terminal, or may be stored in a configuration file.

Further, after the terminal performs the PLMN network attach and the attach is successful, the APN matching method further includes:
determining whether the terminal is currently in a roaming state; if the terminal is not in the roaming state, further determining whether a currently registered PLMN is stored in a second list, and if the currently registered PLMN is not stored in the second list, storing the currently registered PLMN in the second list, or if the currently registered PLMN is already stored in the second list, skipping an operation of storing the currently registered PLMN in the second list; or if the terminal is in the roaming state, skipping an operation of storing the currently registered PLMN in the second list. The currently registered PLMN is obtained by the terminal from the attach accept information returned by the access network device.

It should be noted that in one or more embodiments of this application, the second list is used for storing PLMNs that are currently registered successfully and/or historically registered successfully and belong to the same operator as the HPLMN (that is, non-roaming), and therefore the foregoing registered PLMN may be a currently registered successfully and non-roaming PLMN or may be a historically registered successfully and non-roaming PLMN.

Further, the determining whether the terminal is currently in a roaming state specifically includes: determining whether the HPLMN and the currently registered PLMN belong to the same operator; and if not, determining that the terminal is currently in the roaming state, or if yes, determining that the terminal is currently not in roaming state.

For example, China Mobile (China Mobile) has three PLMNs: 46000, 46002, and 46007. When the HPLMN is 46000 and the PLMN of the attached network is 46002, although the HPLMN is different from the PLMN of the attached network, the two networks both belong to the same operator, namely, China Mobile (China Mobile), and therefore the terminal is not in the roaming state.

For step S13: The terminal performs APN matching in the first list by using a PLMN in a second list if no APN corresponding to the HPLMN is matched in the first list, where the PLMN in the second list is a registered PLMN:
Specifically, the terminal traverses the second list, and ends traversing when an APN is matched, or when no APN is matched, selects a next PLMN in the second list for performing matching, until an APN is matched or no APN is matched by using all the PLMNs in the second list.

The terminal may traverse the second list in a temporal order in which the PLMNs are stored in the second list or based on values of the PLMNs, or the like. This is not limited in this embodiment of this application. Preferably, traversing may be performed in ascending order of the values of the PLMNs in the second list (in a case that the PLMNs are values). Usually, the earlier a PLMN of the operators is established, the smaller the value of the PLMN is. Still using China Mobile (China Mobile) as an example, China Mobile (China Mobile) has three PLMNs: 46000, 46002, and 46007, and the order of network construction of the three PLMNs is 46000, 46002, and 46007. Therefore, the PLMNs in the second list are traversed in a chronological order of network construction of the PLMNs. An earlier order in which the PLMN is constructed indicates a greater probability at which an APN corresponding to the PLMN is stored in the first list in the terminal. Therefore, the speed at which the APN is successfully matched may be increased by traversing the PLMNs in the second list in the chronological order of network construction.

Optionally, in some other embodiments of this application, the APN matching in the first list may alternatively be performed by using an equivalent home public land mobile network EHPLMN before or after the terminal performs APN matching in the first list by using the PLMN in the second list.

Optionally, the performing, by a terminal, APN matching in the first list by using an equivalent home public land mobile network EHPLMN before performing APN matching in the first list by using the PLMN in the second list may specifically include: if no APN corresponding to the HPLMN is matched in the first list, before performing APN matching in the first list by using the PLMN in the second list, first performing, by the terminal, APN matching in the first list by using the equivalent home public land mobile network EHPLMN; and if no APN corresponding to the EHPLMN is matched in the first list by using the EHPLMN, performing APN matching in the first list by using the PLMN in the second list.

Optionally, the performing, by a terminal, APN matching in the first list by using an equivalent home public land mobile network EHPLMN before performing the APN matching in the first list by using the PLMN in the second list may further include: first performing APN matching in the first list by using the equivalent home public land mobile network EHPLMN; if no APN corresponding to the EHPLMN is matched in the first list by using the equivalent home public land mobile network EHPLMN, performing APN matching in the first list by using the HPLMN; and if no APN corresponding to the HPLMN is matched in the first list, performing APN matching in the first list by using the PLMN in the second list.

Optionally, the performing, by a terminal, APN matching in the first list by using an equivalent home public land mobile network EHPLMN before performing APN matching in the first list by using the PLMN in the second list may specifically include: performing, by the terminal, APN matching in the first list by using the PLMN in the second list, and if no corresponding APN is matched, performing APN matching in the first list by using the equivalent home public land mobile network EHPLMN.

It can be understood that by performing APN matching in the first list by using the equivalent home public land mobile network EHPLMN before or after the terminal performs APN matching in the first list by using the PLMN in the second list, the success rate of the APN matching can be further increased, so that when the first list preset in the terminal does not include corresponding information of a newly added operator PLMN and an APN, an APN of the operator is obtained by searching PLMNs that have been successfully registered and the known EHPLMN, and a network connection is established by using the APN, thereby greatly avoiding the situation in which the terminal cannot use an APN to establish a network connection caused by expansion of the PLMNs of the operator.

Further, after the APN is matched, the terminal initiates a PDP context activation request to a network side, and the PDP context activation request carries information such as the matched APN or the quality of service. When the terminal receives information returned by the network side for accepting the PDP context activation request, the PDP context activation process is completed.

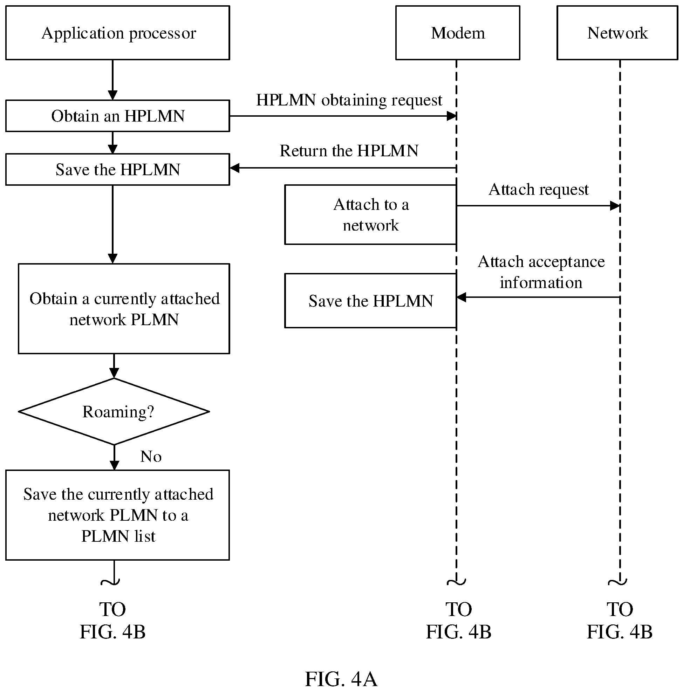

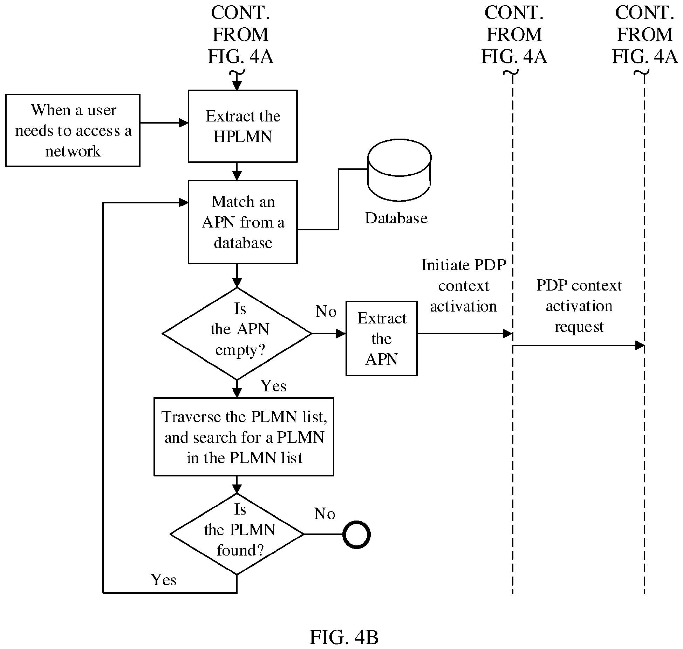

FIG. 4A-FIG. 4B are an interactive flowchart of an APN matching method according to an embodiment of this application. As shown in FIG. 4A-FIG. 4B, a terminal includes an AP (Application Processor, application processor) and a modem (Modem). The application processor interacts with a network end by using the modem, and the interaction process includes:
1. After a USIM card is inserted successfully, the application processor initiates an HPLMN obtaining request to the modem.
2. The modem reads an IMSI from an IMSI file of the USIM card, parses the IMSI to obtain a home public land mobile network HPLMN, and returns the HPLMN to the application processor; and the application processor saves the HPLMN to the terminal.
3. The modem initiates an attach request to a network side (including an access layer device and a core layer device).
4. The network side returns an attach accept request to the modem, where the attach accept request carries a registered PLMN.
5. The application processor initiates a request to the modem for obtaining a currently registered PLMN.
6. The modem returns the currently registered PLMN to the application processor.
7. The application processor determines whether a current state is a roaming state, and if not, saves the currently registered PLMN to a PLMN list (the PLMN list is the second list in the foregoing description).
8. When a user needs to access a network, matching is performed by using the HPLMN and a list that is in a database and that is used for storing a correspondence between a PLMN and an APN (that is, the first list in the foregoing description).
9. If the matched APN is empty, the PLMN list is traversed and matching of PLMNs in the PLMN list with the list that is in the database and that is used for storing a correspondence between a PLMN and an APN is performed.
10. A PDP context activation request is initiated to the network side by using a matched APN, to obtain network data.

For example, assuming that the HPLMN in the USIM card of the terminal is 46020, a correspondence between a PLMN1 (46021) and an APN1 and a correspondence between a PLMN2 (46022) and an APN2 are preset in the first list of the terminal, where 46020, 46021, and 46022 are EPLMNs (Equivalent Public Land Mobile Networks, equivalent PLMNs), if the PLMN list includes the PLMN1 and the PLMN2, the PDP context activation request sent by the terminal to the network side may include the PLMN1 or the PLMN2.

It can be understood that the APN matching method provided in the embodiment of this application performs APN matching by using a successfully registered PLMN in the second list when the APN matched by the HPLMN is empty (that is, no corresponding APN is matched). The foregoing method greatly increases a success rate of APN matching when an operator adds a new PLMN and the newly added PLMN is not stored in a list for storing a relationship between an operator PLMN and APN information corresponding to the operator PLMN in the terminal or when the terminal is abnormal, and can simultaneously adapt to the 5G, 4G, 3G, 2G, and the like, with high reliability.

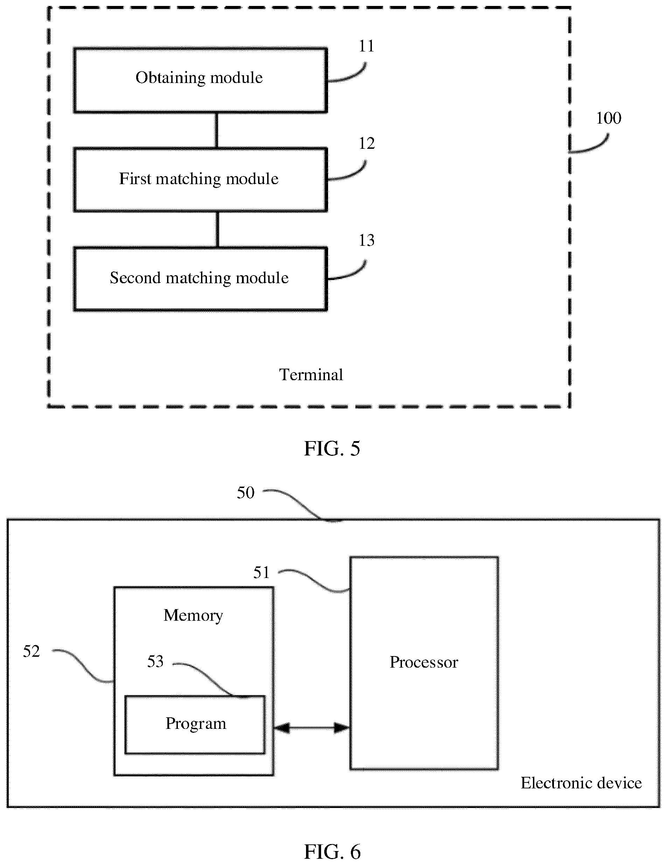

FIG. 5 is a structural block diagram of a terminal according to an embodiment of this application. The embodiment of this application further provides a terminal 100, including:
an obtaining module 11, configured to obtain a home public land mobile network HPLMN;
a first matching module 12, configured to perform a PLMN network attach, and after the attach is successful, perform APN matching in a first list by using the HPLMN, where the first list stores a correspondence between at least one PLMN and an APN; and
a second matching module 13, configured to perform APN matching in the first list by using a PLMN in a second list if no APN corresponding to the HPLMN is matched in the first list, where the second list stores at least one successfully registered PLMN.

Optionally, the first matching module 12 includes:
a first determining unit, configured to determine whether a current state is a roaming state;
a second determining unit, configured to determine whether a currently registered PLMN is stored in the second list if the current state is not the roaming state; and
a storage unit, configured to store the currently registered PLMN in the second list if the currently registered PLMN is not stored in the second list.

The obtaining module 11 is specifically configured to perform the following steps: reading an IMSI from a USIM card, and parsing the IMSI to obtain an HPLMN.

Optionally, the second matching module 13 includes:
a first matching unit, configured to perform APN matching in the first list by using an equivalent home public land mobile network EHPLMN if no APN corresponding to the HPLMN is matched in the first list; and
a second matching unit, configured to perform APN matching in the first list by using a registered PLMN in the second list if no APN corresponding to the EHPLMN is matched in the first list by using the EHPLMN.

Optionally, the terminal 100 further includes:
a third matching module, configured to perform APN matching in the first list by using an equivalent home public land mobile network EHPLMN if no corresponding APN is matched in the first list by the terminal by using the registered PLMN in the second list.

Optionally, the second matching module 12 is specifically configured to perform the following step: performing matching in the first list in ascending order of values of PLMNs in the second list, and ending the matching when a corresponding APN is matched.

An embodiment of this application further provides a storage medium, where the storage medium includes a stored program, and the program, when run, controls a device in which the storage medium is located to perform the APN matching method according to any one of the embodiments. To avoid repetition, details are not described herein. Alternatively, the computer program, when run by a processor, implements functions of the modules/units in the terminal in the embodiment. To avoid repetition, details are not described herein.

Referring to FIG. 6, an embodiment of this application provides a terminal 50. The terminal 50 of the embodiment includes a processor 51, a memory 52, and a program 53 that is stored in the memory 52 and that can be run on the processor 51. The program 53, when run by the processor 51, implements the APN matching method of the embodiment. To avoid repetition, details are not described herein.

The terminal 50 may be a computing device such as a desktop computer, a notebook, a palmtop computer, and a cloud server. The terminal 50 may include, but not limited to, the processor 51, the memory 52, and the like. A person skilled in the art can understood that FIG. 6 is merely an example of the terminal 50 and does not constitute a limitation to the terminal 50, and may include more or fewer components than those illustrated, or a combination of specific components, or different components. For example, an electronic device may further include an input/output device, a network access device, a bus, or the like.

The processor 51 may be a central processing unit (Central Processing Unit, CPU), or may be another general-purpose processor, digital signal processor (Digital Signal Processor, DSP), application specific integrated circuit (Application Specific Integrated Circuit, ASIC), field-programmable gate array (Field-Programmable Gate Array, FPGA) or another programmable logic device, a discrete gate, a transistor logic device, a discrete hardware component, or the like. The general-purpose processor may be a microprocessor, or the processor may be any conventional processor or the like.

The memory 52 may be an internal storage unit of the terminal 50 such as a hard disk or an internal memory of the terminal 50. The memory 52 may alternatively be an external storage device of the terminal 50, such as a pluggable hard disk, a smart media card (Smart Media Card, SMC), a secure digital (Secure Digital, SD) card, a flash card (Flash Card), or the like provided on the terminal 50. Alternatively, the memory 52 may include both an internal storage unit of the terminal 50 and an external storage device. The memory 52 is configured to store a computer program and other programs and data required by the electronic device. The memory 52 may also be configured to temporarily store data that has been outputted or that is to be outputted.

It can be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a hardware and software functional unit.

The integrated unit implemented in the form of a software functional unit may be stored in a computer-readable storage medium. The software functional unit is stored on a storage medium, and includes instructions to cause a computer apparatus (which may be a personal computer, a server, a network apparatus, or the like) or a processor (Processor) to perform all or some of the steps of the embodiment methods of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An Access Point Name, APN, matching method, comprising:
obtaining (S11) a home public land mobile network, HPLMN, which comprises reading an International Mobile Subscriber Identification Number, IMSI, from a Universal Subscriber Identity Module, USIM, card, and parsing the IMSI to obtain the HPLMN; and
performing (S12) a PLMN network attach, and after the attach is successful, performing APN matching in a first list by using the HPLMN, wherein the first list stores a correspondence between at least one PLMN and an APN;
**characterized in that** the method further comprises:
performing (S13) APN matching in the first list by using a PLMN in a second list if no APN corresponding to the HPLMN is matched in the first list, wherein the PLMN in the second list is a registered PLMN.

2. The APN matching method according to claim 1, wherein after the performing, by a terminal, the PLMN network attach and after the attach is successful, the method further comprises:
determining whether a current state is a roaming state;
determining whether a currently registered PLMN is stored in the second list if the current state is not the roaming state; and
storing the currently registered PLMN in the second list if the currently registered PLMN is not stored in the second list.

3. The APN matching method according to claim 1, wherein the performing APN matching in the first list by using a PLMN in a second list if no APN corresponding to the HPLMN is matched in the first list comprises:
performing APN matching in the first list by using an equivalent home public land mobile network, EHPLMN, if no APN corresponding to the HPLMN is matched in the first list; and
performing APN matching in the first list by using a registered PLMN in the second list if no APN corresponding to the EHPLMN is matched in the first list by using the EHPLMN.

4. The APN matching method according to claim 1, wherein the method further comprises:
performing APN matching in the first list by using an equivalent home public land mobile network, EHPLMN, if no corresponding APN is matched in the first list by a terminal by using a registered PLMN in the second list.

5. The APN matching method according to any one of claims 1 to 4, wherein the performing APN matching in the first list by using a PLMN in a second list comprises:
performing matching in the first list in ascending order of values of PLMNs in the second list, and ending the matching until a corresponding APN is matched.

6. The APN matching method according to any one of claims 1 to 5, wherein the performing APN matching in the first list by using a PLMN in a second list comprises:
performing APN matching in the first list by using a PLMN in a second list, wherein the PLMN in the second list is a registered PLMN and belong to the same operator as the HPLMN.

7. A terminal (100), comprising:
an obtaining module (11), configured to obtain a home public land mobile network, HPLMN, wherein the obtaining module (11) is specifically configured to read an International Mobile Subscriber Identification Number, IMSI, from a Universal Subscriber Identity Module, USIM, card, and parse the IMSI to obtain the HPLMN; and
a first matching module (12), configured to perform a PLMN network attach, and after the attach is successful, perform APN matching in a first list by using the HPLMN, wherein the first list stores a correspondence between at least one PLMN and an APN;
**characterized in that** the terminal (100) further comprises a second matching module (13), configured to perform APN matching in the first list by using a PLMN in a second list if no APN corresponding to the HPLMN is matched in the first list, wherein the PLMN in the second list is a registered PLMN.

8. The terminal according to claim 7, wherein the first matching module comprises:
a first determining unit, configured to determine whether a current state is a roaming state;
a second determining unit, configured to determine whether a currently registered PLMN is stored in the second list if the current state is not the roaming state; and
a storage unit, configured to store the currently registered PLMN in the second list if the currently registered PLMN is not stored in the second list.

9. A storage medium, wherein the storage medium comprises a stored program, and the program, when executed, controls a device in which the storage medium is located to perform the method according to any one of claims 1 to 6.

10. A terminal (50), comprising a memory (52) and a processor (51), wherein the memory (52) is configured to store information comprising program instructions, the processor (51) is configured to control execution of the program instructions, and the program instructions, when loaded and executed by the processor (51), implement the method according to any one of claims 1 to 6.

## Patentansprüche

1. Zugangspunktnamen- bzw. APN-Abgleichungsverfahren, umfassend:
Erhalten (S11) eines öffentlichen Landmobil-Heimnetzwerks, HPLMN, was umfasst, eine internationale Mobilteilnehmer-Identifikationsnummer, IMSI, von einer universellen Teilnehmeridentitätsmodul- bzw. USIM-Karte zu lesen und die IMSI zu zergliedern, um das HPLMN zu erhalten; und
Durchführen (S12) einer PLMN-Netzwerkanbindung und, nachdem die Anbindung erfolgreich ist, Durchführen einer APN-Abgleichung in einer ersten Liste unter Verwendung des HPLMN, wobei die erste Liste eine Korrespondenz zwischen mindestens einem PLMN und einem APN speichert;
**dadurch gekennzeichnet, dass** das Verfahren ferner umfasst:
Durchführen (S13) einer APN-Abgleichung in der ersten Liste unter Verwendung eines PLMN in einer zweiten Liste, wenn kein APN korrespondierend mit dem HPLMN in der ersten Liste abgeglichen ist, wobei das PLMN in der zweiten Liste ein registriertes PLMN ist.

2. APN-Abgleichungsverfahren nach Anspruch 1, wobei nach dem Durchführen, durch ein Endgerät, der PLMN-Netzwerkanbindung, und nachdem die Anbindung erfolgreich ist, das Verfahren ferner umfasst:
Bestimmen, ob ein gegenwärtiger Zustand ein Roaming-Zustand ist;
Bestimmen, ob ein gegenwärtig registriertes PLMN in der zweiten Liste gespeichert ist, wenn der gegenwärtige Zustand nicht der Roaming-Zustand ist; und
Speichern des gegenwärtig registrierten PLMN in der zweiten Liste, wenn das gegenwärtig registrierte PLMN nicht in der zweiten Liste gespeichert ist.

3. APN-Abgleichungsverfahren nach Anspruch 1, wobei das Durchführen einer APN-Abgleichung in der ersten Liste unter Verwendung eines PLMN in einer zweiten Liste, wenn kein APN korrespondierend mit dem HPLMN in der ersten Liste abgeglichen ist, umfasst:
Durchführen einer APN-Abgleichung in der ersten Liste unter Verwendung eines äquivalenten öffentlichen Landmobil-Heimnetzwerks, EHPLMN, wenn kein APN korrespondierend mit dem HPLMN in der ersten Liste abgeglichen ist; und
Durchführen einer APN-Abgleichung in der ersten Liste unter Verwendung eines registrierten PLMN in der zweiten Liste, wenn kein APN korrespondierend mit dem EHPLMN in der ersten Liste abgeglichen ist, unter Verwendung des EHPLMN.

4. APN-Abgleichungsverfahren nach Anspruch 1, wobei das Verfahren ferner umfasst:
Durchführen einer APN-Abgleichung in der ersten Liste unter Verwendung eines äquivalenten öffentlichen Landmobil-Heimnetzwerks, EHPLMN, wenn kein korrespondierender APN in der ersten Liste abgeglichen ist, durch ein Endgerät unter Verwendung eines registrierten PLMN in der zweiten Liste.

5. APN-Abgleichungsverfahren nach einem der Ansprüche 1 bis 4, wobei das Durchführen der APN-Abgleichung in der ersten Liste unter Verwendung eines PLMN in einer zweiten Liste umfasst:
Durchführen einer Abgleichung in der ersten Liste in aufsteigender Reihenfolge von Werten von PLMNs in der zweiten Liste und Beenden der Abgleichung, bis ein korrespondierender APN abgeglichen ist.

6. APN-Abgleichungsverfahren nach einem der Ansprüche 1 bis 5, wobei das Durchführen der APN-Abgleichung in der ersten Liste unter Verwendung eines PLMN in einer zweiten Liste umfasst:
Durchführen einer APN-Abgleichung in der ersten Liste unter Verwendung eines PLMN in einer zweiten Liste, wobei das PLMN in der zweiten Liste ein registriertes PLMN ist und zu demselben Betreiber gehört wie das HPLMN.

7. Endgerät (100), umfassend:
ein Erhaltungsmodul (11), konfiguriert zum Erhalten eines öffentlichen Landmobil-Heimnetzwerks, HPLMN, wobei das Erhaltungsmodul (11) spezifisch konfiguriert ist zum Lesen einer internationalen Mobilteilnehmer-Identifikationsnummer, IMSI, von einer universellen Teilnehmeridentitätsmodul- bzw. USIM-Karte und Zergliedern der IMSI, um das HPLMN zu erhalten; und
ein erstes Abgleichungsmodul (12), konfiguriert zum Durchführen einer PLMN-Netzwerkanbindung und, nachdem die Anbindung erfolgreich ist, Durchführen einer APN-Abgleichung in einer ersten Liste unter Verwendung des HPLMN, wobei die erste Liste eine Korrespondenz zwischen mindestens einem PLMN und einem APN speichert;
**dadurch gekennzeichnet, dass** das Endgerät (100) ferner ein zweites Abgleichungsmodul (13) umfasst, konfiguriert zum Durchführen einer APN-Abgleichung in der ersten Liste unter Verwendung eines PLMN in einer zweiten Liste, wenn kein APN korrespondierend mit dem HPLMN in der ersten Liste abgeglichen ist, wobei das PLMN in der zweiten Liste ein registriertes PLMN ist.

8. Endgerät nach Anspruch 7, wobei das erste Abgleichungsmodul umfasst:
eine erste Bestimmungseinheit, konfiguriert zum Bestimmen, ob ein gegenwärtiger Zustand ein Roaming-Zustand ist;
eine zweite Bestimmungseinheit, konfiguriert zum Bestimmen, ob ein gegenwärtig registriertes PLMN in der zweiten Liste gespeichert ist, wenn der gegenwärtige Zustand nicht der Roaming-Zustand ist; und
eine Speichereinheit, konfiguriert zum Speichern des gegenwärtig registrierten PLMN in der zweiten Liste, wenn das gegenwärtig registrierte PLMN nicht in der zweiten Liste gespeichert ist.

9. Speichermedium, wobei das Speichermedium ein gespeichertes Programm umfasst und das Programm, wenn es ausgeführt wird, eine Vorrichtung, in dem das Speichermedium angeordnet ist, zum Durchführen des Verfahrens nach einem der Ansprüche 1 bis 6 steuert.

10. Endgerät (50), umfassend einen Speicher (52) und einen Prozessor (51), wobei der Speicher (52) konfiguriert ist zum Speichern von Informationen, die Programmanweisungen umfassen, der Prozessor (51) konfiguriert ist zum Steuern der Ausführung der Programmanweisungen und die Programmanweisungen, wenn sie durch den Prozessor (51) geladen und ausgeführt werden, das Verfahren nach einem der Ansprüche 1 bis 6 implementieren.

## Revendications

1. Procédé de mise en correspondance de noms de points d'accès, APN, comprenant les étapes suivantes :
obtenir (S11) un réseau mobile terrestre public domestique, HPLMN, qui comprend la lecture d'un numéro d'identification d'abonné mobile international, IMSI, à partir d'une carte de module d'identité d'abonné universel, USIM, et analyser l'IMSI pour obtenir le HPLMN ; et
effectuer (S12) un rattachement au réseau PLMN et, une fois le rattachement réussi, effectuer une mise en correspondance d'APN dans une première liste en utilisant le HPLMN, la première liste stockant une mise en correspondance entre au moins un PLMN et un APN ;
**caractérisé en ce que** le procédé comprend en outre l'étape suivante :
effectuer (S13) une mise en correspondance d'APN dans la première liste en utilisant un PLMN dans une deuxième liste si aucun APN correspondant au HPLMN n'est mis en correspondance dans la première liste, le PLMN dans la deuxième liste étant un PLMN enregistré.

2. Procédé de mise en correspondance d'APN selon la revendication 1, dans lequel, après l'exécution, par un terminal, du rattachement au réseau PLMN, et après que le rattachement a réussi, le procédé comprend en outre les étapes suivantes :
déterminer si l'état courant est un état d'itinérance ;
déterminer si un PLMN actuellement enregistré est stocké dans la deuxième liste si l'état courant n'est pas l'état d'itinérance ; et
stocker le PLMN actuellement enregistré dans la deuxième liste si le PLMN actuellement enregistré n'est pas stocké dans la deuxième liste.

3. Procédé de mise en correspondance d'APN selon la revendication 1, dans lequel l'exécution de la mise en correspondance d'APN dans la première liste en utilisant un PLMN dans une deuxième liste si aucun APN correspondant au HPLMN n'est mis en correspondance dans la première liste comprend les étapes suivantes :
effectuer une mise en correspondance d'APN dans la première liste en utilisant un réseau mobile terrestre public domestique équivalent, EHPLMN, si aucun APN correspondant au HPLMN ne correspond à la première liste ; et
effectuer une mise en correspondance d'APN dans la première liste en utilisant un PLMN enregistré dans la deuxième liste si aucun APN correspondant à l'EHPLMN ne correspond à la première liste en utilisant l'EHPLMN.

4. Procédé de mise en correspondance d'APN selon la revendication 1, dans lequel le procédé comprend en outre l'étape suivante :
effectuer une mise en correspondance d'APN dans la première liste à l'aide d'un réseau mobile terrestre public domestique équivalent, EHPLMN, si aucun APN correspondant n'est mis en correspondance dans la première liste par un terminal à l'aide d'un PLMN enregistré dans la deuxième liste.

5. Procédé de mise en correspondance d'APN selon l'une quelconque des revendications 1 à 4, dans lequel la réalisation de la mise en correspondance d'APN dans la première liste à l'aide d'un PLMN dans une deuxième liste comprend l'étape suivante :
effectuer une mise en correspondance dans la première liste dans l'ordre croissant des valeurs des PLMN dans la deuxième liste, et terminer la mise en correspondance jusqu'à ce qu'un APN correspondant soit mis en correspondance.

6. Procédé de mise en correspondance d'APN selon l'une quelconque des revendications 1 à 5, la réalisation de la mise en correspondance d'APN dans la première liste en utilisant un PLMN dans une deuxième liste comprenant :
la réalisation d'une mise en correspondance d'APN dans la première liste en utilisant un PLMN dans une deuxième liste, le PLMN dans la deuxième liste étant dans un PLMN enregistré et appartenant au même opérateur que le HPLMN.

7. Terminal (100) comprenant :
un module d'obtention (11), configuré pour obtenir un réseau mobile terrestre public domestique, HPLMN, dans lequel le module d'obtention (11) est spécifiquement configuré pour lire un numéro d'identification d'abonné mobile international, IMSI, à partir d'une carte de module d'identité d'abonné universel, USIM, et analyser l'IMSI pour obtenir le HPLMN ; et
un premier module de mise en correspondance (12), configuré pour effectuer un rattachement au réseau PLMN et, une fois le rattachement réussi, pour effectuer une mise en correspondance d'APN dans une première liste à l'aide du HPLMN, la première liste stockant une correspondance entre au moins un PLMN et un APN ;
**caractérisé en ce que** le terminal (100) comprend en outre un deuxième module de mise en correspondance (13), configuré pour effectuer une mise en correspondance d'APN dans la première liste en utilisant un PLMN dans une deuxième liste si aucun APN correspondant au HPLMN n'est mis en correspondance dans la première liste, le PLMN dans la deuxième liste étant un PLMN enregistré.

8. Terminal selon la revendication 7, dans lequel le premier module de mise en correspondance comprend :
une première unité de détermination, configurée pour déterminer si un état courant est un état d'itinérance ;
une deuxième unité de détermination, configurée pour déterminer si un PLMN actuellement enregistré est stocké dans la deuxième liste si l'état courant n'est pas l'état d'itinérance ; et
une unité de stockage, configurée pour stocker le PLMN actuellement enregistré dans la deuxième liste si le PLMN actuellement enregistré n'est pas stocké dans la deuxième liste.

9. Support de stockage, dans lequel le support de stockage comprend un programme stocké, et le programme, lorsqu'il est exécuté, commande un dispositif dans lequel le support de stockage est situé pour exécuter le procédé selon l'une quelconque des revendications 1 à 6.

10. Terminal (50), comprenant une mémoire (52) et un processeur (51), dans lequel la mémoire (52) est configurée pour stocker des informations comprenant des instructions de programme, le processeur (51) étant configuré pour contrôler l'exécution des instructions de programme, et les instructions de programme, lorsqu'elles sont chargées et exécutées par le processeur (51), mettant en oeuvre le procédé selon l'une quelconque des revendications 1 à 6.
